# EUROPÄISCHE PATENTANMELDUNG

(11) **EP 1 317 119 A1**
(43) Veröffentlichungstag der Anmeldung: **04.06.2003**
(21) Anmeldenummer: 01128565.7
(22) Anmeldetag: 30.11.2001
(51) Int. Cl.: H04M 3/30, H04L 12/26

(54) **Verfahren zur Ermittlung des Betriebszustandes eines Telekommunikationsnetzes**

(71) Anmelder: SIEMENS AKTIENGESELLSCHAFT, 80333 München (DE)
(72) Erfinder: Kanzian, Christian, 1210 Wien (AT); Liefländer, Ulrich, 82239 Alling (DE); Laskowsky, Rolf, 80689 München (DE); Schmöller, Franz, 82110 Germering (DE)
(74) Vertreter: Peham, Alois, Dipl.-Ing.

(57) **Zusammenfassung**

Die Erfindung betrifft ein Verfahren und eine Anordnung zur Ermittlung des Betriebszustandes zumindest eines Teils eines Telekommunikationsnetzes, insbesondere des Betriebszustandes eines beliebigen Teilnehmeranschlusses in einem Telekommunikationsnetz, bei dem die Anforderung dazu mittels beliebigem Telekommunikationsendgerät erfolgt und der Betriebszustand in vorgebbarer Weise an ein beliebiges Telekommunikationsendgerät ausgegeben wird. Beispielsweise kann ein Teilnehmer in einem Telekommunikationsnetz so Informationen über eine Störung im Telekommunikationsnetz erhalten.

## Beschreibung

Verfahren zur Ermittlung des Betriebszustandes eines Telekommunikationsnetzes.

Die Erfindung betrifft ein Verfahren zur Ermittlung des Betriebszustandes zumindest eines Teils eines Telekommunikationsnetzes, insbesondere des Betriebszustandes eines beliebigen Teilnehmeranschlusses in einem Telekommunikationsnetz. Weiterhin betrifft die Erfindung eine Anordnung zur Durchführung des Verfahrens.

Die große Anzahl von Teilnehmern, die an eine Vermittlungsstelle in einem Telekommunikationsnetz angeschlossen sind, und die Fülle von Diensten, die in einem Telekommunikationsnetz angeboten werden, führen zu einer vergleichsweise hohen Wahrscheinlichkeit für das Auftreten von Fehlern. Durch die große Bedeutung eines funktionstüchtigen Telekommunikationsnetzes für das wirtschaftliche und soziale Zusammenleben, stellt eine Störung eines Teilnehmeranschlusses oder der Verbindungsleitungen im Telekommunikationsnetz ein schwerwiegendes technisches Problem dar.

Insbesondere bei Erkennen einer Fehlfunktion in einem Telekommunikationsnetz ist es erforderlich, den momentanen Zustand dieses Telekommunikationsnetzes festzustellen. Aus diesem Grund kann eine Analyse zumindest eines Teils des Telekommunikationsnetzes initiiert werden, welche beispielsweise die folgenden Prüfungen umfasst:
- Rufnummernorientierte Prüfung von Teilnehmeranschlüssen.
- Gruppenprüfung mit Auflistung der einzelnen Messwerte.
- Einzelprüfungen spezieller Art.
- Einspeisen von analogen Suchtönen für die Leitungsidentifizierung.
- Messen und Speichern der charakteristischen Leitungsdaten.
- Zugriff auf eine zentral geführte Datenbank, in der Informationen über in der Vergangenheit liegende Vorkommnisse, wie zum Beispiel die Anzahl der Störungen, Dauer und Zeitpunkt des Auftretens der Störung, sowie den für das Beheben einer Störung zuständigen Bearbeiter und den daraus resultierenden Zeit- und Materialaufwand gespeichert werden. Weiterhin werden beispielsweise Daten über die relative Verfügbarkeit, beziehungsweise Ausfallzeit in dieser Datenbank verwaltet.
- Kontaktaufnahme mit dem Teilnehmer zum Zwecke der Fehlerbehebung.

Die Erkennung einer Fehlfunktion erfolgt vielfach durch den Nutzer eines defekten Teilnehmeranschlusses, der diese an den Betreiber des Telekommunikationsnetzes weitermeldet. Zu diesem Zweck werden häufig sogenannte "Call Center" errichtet, wobei das dort arbeitende Personal in Zusammenarbeit mit der Person, die einen Fehler meldet, eine grobe Erstanalyse durchführt, danach ein "Trouble Ticket" erstellt und dieses an den zuständigen Service-Techniker weiterleitet. Gegebenenfalls kann dieser Vorgang mit Hilfe von Sprachautomaten unterstützt werden, welcher Teilaufgaben dieses Vorganges vornimmt, wie etwa die Zuteilung eines Anrufers zu bestimmten zuständigen Personen innerhalb eines Call-Centers, oder die Übermittlung eines gesprochenen Reparaturauftrages an einen bestimmten Service-Techniker.

Aus praktischen Gründen ist eine Sicherstellung der Störungsannahme rund um die Uhr nicht oder nur sehr schwer möglich. Wünschenswert ist es daher, eine Möglichkeit zu schaffen, um einen Teilnehmeranschluss ohne Hilfestellung von Wartungspersonal testen zu können.

Aus dem Stand der Technik ist zu diesem Zwecke ein System bekannt, bei dem von einem Teilnehmeranschluss eine Verbindung zu einer automatischen Prüfeinrichtung aufgebaut und anschließend eine Prüfung dieses Teilnehmeranschlusses initiiert wird. Das Prüfergebnis wird mit Hilfe eines Quittungstons übermittelt, der eine Gut- oder Schlecht-Aussage beinhaltet. Nachteilig an diesem System ist, dass das Ergebnis der Prüfung nicht näher spezifiziert wird, die Ausgabe nur an das Telekommunikationsendgerät erfolgt, von dem aus der Auftrag abgesendet wurde, und daher nur ohnehin betriebsbereite Teilnehmeranschlüsse getestet werden können.

Der Erfindung liegt also die Aufgabe zugrunde, ein Verfahren anzugeben, das die Ermittlung des Betriebszustandes eines Telekommunikationsnetzes auf einfache Weise ermöglicht.

Dies geschieht erfindungsgemäß mit einem Verfahren der eingangs erwähnten Art,
- bei dem die Anforderung zur Ermittlung mittels beliebigem Telekommunikationsendgerät in das Telekommunikationsnetz übermittelt wird,
- bei dem aufgrund dieser Anforderung die Werte vorgegebener Betriebsparameter des Telekommunikationsnetzes ermittelt werden,
- bei dem diesen Werten der Betriebsparameter ein Betriebszustand zugeordnet wird und
- bei dem dieser Betriebszustand in vorgebbarer Weise an ein beliebiges Telekommunikationsendgerät ausgegeben wird.

Besonders vorteilhaft am erfindungsgemäßen Verfahren ist, dass dieses praktisch von jedem Teilnehmer eines Telekommunikationsnetzes genutzt werden kann, wobei aber spezielle technische Gegebenheiten des jeweiligen verwendeten Telekommunikationsendgerätes hinsichtlich der Ein- und Ausgabe berücksichtigt werden müssen.

Für die Eingabe, also die Anforderung zur Angabe des Betriebszustandes, kommen beispielsweise akustische und textbasierte Systeme zur Anwendung.

Ein akustisches System kann dabei für die Verarbeitung von Tönen gemäß dem Standard "Dual Tone Multifrequency Code", kurz DTMF, vorgesehen sein. Dabei stehen im wesentlichen die 12 Tasten eines Telefons zur Verfügung. Diese Variante ist daher für nahezu alle Telekommunikationsendgeräte verfügbar, allerdings muss der Benutzer Kenntnisse über die den einzelnen Tasten zugeordneten Funktionen haben. Vorteilhaft wird der Benutzer daher von einem Sprachautomaten mit den einzelnen Funktionen und den dafür zu drückenden Tasten vertraut gemacht. Denkbar ist auch, dass direkt die Sprache des Benutzers in entsprechende Funktionen umgesetzt wird. Das Drücken von Tasten ist dabei in der Regel nicht mehr erforderlich. Diese Technik ist auch unter dem Begriff "Interactive Voice Recognition", kurz IVR, bekannt.

Für die Eingabe in Textform kann dagegen beispielsweise das "Short Message Service", kurz SMS, genutzt werden. Dabei wird eine Textnachricht, die eine Anforderung zur Angabe des Betriebszustandes beinhaltet, meist mittels Mobiltelefon in das Telekommunikationsnetz übermittelt. Um dem Benutzer die Anforderung zu erleichtern, kann auch eine vorgefertigte SMS, welche den korrekten Befehl beinhaltet, an das Telefon des Benutzers geschickt werden.

Denkbar ist auch der Einsatz von Geräten, die nach dem Standard "Wireless Application Protocol", kurz WAP, arbeiten. Dabei kann vom Telekommunikationsnetz eine Eingabemaske an ein Mobiltelefon übermittelt werden, welche der Benutzer ausfüllt und wieder an das Telekommunikationsnetz zurückschickt, und somit die Anforderung zur Angabe des Betriebszustandes abgibt. Ein maßgeblicher Standard für die übermittelten Texte ist die "Wireless Markup Language", kurz WML.

Desgleichen ist die Eingabe über Geräte möglich, welche geeignet sind, Daten gemäß dem Standard "Hypertext Markup Language", kurz HTML, zu verarbeiten. Beispiele für derartige Geräte sind Personal Computer und Mobiltelefone, welche nach dem Standard "Universal Mobile Telephony System", kurz UMTS, arbeiten.

HTML hat die Aufgabe, die logischen Bestandteile eines Dokuments zu beschreiben und enthält daher Befehle zum Markieren typischer Elemente eines Dokuments, wie Überschriften, Textabsätze, Listen, Tabellen oder Grafikreferenzen. Ein weiterer Hauptbestandteil von HTML sind Verweise auf weitere Dokumente oder Stellen innerhalb eines Dokuments, welche unter dem Begriff "Links" bekannt sind. HTML ist zu einem maßgebenden Standard für das Internet geworden.

Denkbar ist weiterhin auch der Einsatz von JAVA. JAVA ist eine von Sun Microsystems entwickelte, vollkommen plattformunabhängige Programmiersprache mit spezieller Ausrichtung auf den Einsatz im Internet und lehnt sich in Aufbau und Syntax an die Programmiersprache C/C++ an. Java-Programme können in HTML-Dateien referenziert werden, wobei das Programm in den Arbeitsspeicher des aufrufenden Rechners geladen und dort vom Java-Interpreter des WWW-Browsers ausgeführt wird. JAVA ist ein maßgebender Standard für die komfortable Nutzung des Internets.

Die Ausgabe des Betriebszustandes kann sowohl optisch als auch akustisch erfolgen. Bei der optischen Ausgabe reichen die Möglichkeiten von der einfachen Anzeigelampe, über die Anzeige in Textform, wobei hier neben der Angabe einzelner Wörter auch umfassende Texte verstehen zu sind, bis zur Anwendung von grafischen Informationen. Bei der Ausgabe des Betriebszustandes sind wieder die Kenntnisse des Adressaten zu berücksichtigen, weswegen für die mit einem Telekommunikationsnetz vertrauten Person beispielsweise auch einzelne Werte von Betriebsparametern angegeben werden können, während für Personen, welche keine besonderen Kenntnisse über Telekommunikationsnetze besitzen, eher Aussagen in reiner verbaler Form zur Anwendung kommen werden.

Für die akustische Ausgabe kommen beispielsweise Texte in gesprochener Form zur Anwendung, die etwa mit Hilfe eines Text-/Sprachumsetzers erfolgt, oder durch Ausgabe vorgefertigter "Samples". Dabei wird ein akustisches Signal abgetastet und die einzelnen Abtastwerte werden abgespeichert. Diese Variante eignet sich besonders für Anwender, die mit den Gegebenheiten eines Telekommunikationsnetzes weniger vertraut sind.

Prinzipiell können die für die Eingabe erwähnten Techniken in der Regel gleichermaßen auch für die Ausgabe eingesetzt werden.

Sowohl die Vorgabe der Betriebsparameter, als auch die Zuordnung eines Betriebszustandes kann unter Anwendung sogenannter scharfer oder unscharfer Logik erfolgen. Letztere ist auch unter dem Begriff "Fuzzy Logic" bekannt. Bei der scharfen Logik wird beispielsweise ausgewertet, ob ein Betriebsparameter in einen bestimmten Wertebereich fällt, und anhand einer Wahr- oder Falschaussage die weitere Vorgangsweise abgeleitet. Zwischen diesen beiden Aussagen gibt es keine weitere Abstufung, so wie dies bei der unscharfen Logik der Fall ist. Ein Ergebnis kann hier teilweise wahr, teilweise falsch sein. Diese Technik eignet sich insbesondere für Aussagen, bei denen menschliche Erfahrungswerte einfließen sollen. Beispielsweise kann die Zuordnung eines Betriebszustandes zu den Werten von Betriebsparametern, die dem mit einem Telekommunikationsnetz vertrautem Personen geläufig ist, auf vergleichsweise einfache Weise erfolgen.

Für das erfindungsgemäße Verfahren ist aber auch die Anwendung sogenannter neuronaler Netze denkbar. Diese Systeme passen ihr Verhalten während einer Trainingsphase selbstständig äußeren Einflüssen an und sind sehr gut geeignet, eine Fülle von Informationen zu verarbeiten und anhand dieser Informationen eine Aussage zu treffen. Beim erfindungsgemäßen Verfahren bilden die Betriebsparameter dabei zum Beispiel die Eingänge eines neuronalen Netzes, die zugeordneten Betriebszustände die Ausgänge dieses Netzes. Auch hier wird, ähnlich wie bei der unscharfen Logik, nur selten eine eindeutige Aussage getroffen. Vielmehr besteht die Aussage darin, eine Wahrscheinlichkeit für das Vorhandensein eines bestimmten Betriebszustandes anzugeben. Auch diese Technik kann sowohl für die Vorgabe der Betriebsparameter, als auch für die Zuordnung eines Betriebszustandes eingesetzt werden.

Unter Telekommunikationsnetzen sind im Zusammenhang mit dem erfindungsgemäßen Verfahren sowohl klassische Telekommunikationsnetze als auch klassische Computernetze zu verstehen.

Günstig ist es,
- wenn als Betriebsparameter ein Datensatz einer Datenbank vorgesehen wird und/oder
- wenn als Betriebsparameter ein elektrischer Parameter, insbesondere ein elektrischer Widerstand, eine Kapazität oder eine Induktivität, vorgesehen wird und/oder
- wenn als Betriebsparameter eine Fehlerrate bei der digitalen Datenübertragung vorgesehen wird.

Auf diese Weise können die Betriebsparameter, die in ihrer Art sehr verschieden und in einem Telekommunikationsnetz oft nur verteilt vorliegen, beziehungsweise erst aufgrund einer Anforderung ermittelt werden müssen, auf vorteilhafte Weise verknüpft werden. Beispielsweise kann bei einer Anfrage eines Teilnehmers in einem Telekommunikationsnetz, den Zustand seines Teilnehmeranschlusses zu ermitteln, die Leitung zu seinem Telekommunikationsendgerät hinsichtlich seiner elektrischen Parameter überprüft, eine Datenbank, in der etwa aktuelle bekannte Störungen vermerkt werden, abgefragt und die Ergebnisse zu einer Aussage des Zustands des Teilnehmeranschlusses verknüpft werden. Die Datenbank kann dabei auch Informationen über das vermutliche Ende einer Störung, beziehungsweise Details über Art und Weise derselben enthalten. Weiters ist die Verarbeitung von gebührenbezogenen Daten hinsichtlich einer Priorisierung von Störungsfällen denkbar. Insbesondere bei Anwendung des paketvermittelten Sprechverkehrs kann die Fehlerrate bei der Datenübertragung zur Ermittlung eines Zustandes herangezogen werden.

Eine besonders vorteilhafte Ausgestaltung der Erfindung ist mit einem Verfahren gegeben,
- bei dem die Anforderung zusätzlich vom Benutzer des Telekommunikationsendgerätes gemachte Angaben umfasst,
- bei dem diese Angaben für die Vorgabe der zu ermittelnden Betriebsparameter herangezogen werden.

Diese Variante eignet sich insbesondere für eine effiziente Durchführung der Ermittlung der Werte vorgegebener Betriebsparameter, da der Umfang der Betriebsparameter, deren Werte ermittelt werden müssen, aufgrund der Angaben des Benutzers des Telekommunikationsendgerätes eingegrenzt werden können. Um leicht verwertbare Angaben vom Benutzer zu erhalten, können diese auch interaktiv abgefragt werden. Die dazu nötigen Anweisungen und Fragen an den Benutzer können insbesondere für Personen, welche über keine besonderen Kenntnisse bezüglich des Aufbaus eines Telekommunikationsnetzes und der darin ablaufenden Vorgänge und herrschenden Systemzustände verfügen, so formuliert werden, dass sie auch ohne diese Kenntnisse befolgt und beantwortet werden können.

Vorteilhaft ist es weiterhin,
- wenn die Anforderung zusätzlich vom Benutzer des Telekommunikationsendgerätes gemachte Angaben umfasst,
- wenn diese Angaben neben den ermittelten Werten der Betriebsparameter für die Zuordnung eines Betriebszustands herangezogen werden.

Hier werden die Angaben des Benutzers des Telekommunikationsendgerätes dazu benutzt, eine Aussage über den Betriebszustand in einem Telekommunikationsnetz zu treffen, die sich nicht ausschließlich auf die Werte der Betriebsparameter stützt, sondern in die auch die Angaben des Benutzers des Telekommunikationsendgerätes einfließen. Diese Variante des erfindungsgemäßen Verfahrens ist insbesondere dann vorteilhaft, wenn die für die Zuordnung eines Betriebszustandes erforderlichen Angaben nicht oder nur unter erheblichem Aufwand auf andere Weise beschafft werden können. Auch hier können diese Angaben interaktiv abgefragt werden, um leicht verwertbare Angaben vom Benutzer zu erhalten. Bei der Formulierung der dazu erforderlichen Anweisungen und Fragen sind wiederum die Kenntnisse des Benutzers zu berücksichtigen. Denkbar sind dabei auch verschiedene Formulierungen für unterschiedliche Benutzergruppen.

Besonders vorteilhaft ist auch ein Verfahren,
- bei dem einem durch die Werte der Betriebsparameter gekennzeichneten Zustand ein Zustand eines Wartungsprozesses zugeordnet wird,
- bei dem diesem Zustand eines Wartungsprozesses die Ausführung zumindest eines vorgegebenen Prozessschrittes folgt und
- bei dem der Wartungsprozess in einen weiteren Zustand wechselt.

Hierbei wird einem bestimmten Zustand eines Telekommunikationsnetzes, insbesondere einem, der einen Störfall kennzeichnet, ein Zustand eines Wartungsprozesses zugeordnet. Beispielsweise kann dieser Zustand durch die Information "Anschluss Teilnehmer X wegen zu hoher Fehlerrate bei der digitalen Datenübertragung gestört" charakterisiert werden. Ein darauf folgender Prozessschritt ist etwa die Erzeugung eines sogenannten "Trouble Tickets", welches in etwa mit einem elektronischem Reparaturauftrag, gegebenenfalls mit Beschreibung der Störung, verglichen werden kann, und die Verständigung eines dafür zuständigen Technikers, eventuell unter Berücksichtigung seines momentanen Aufenthaltsortes. Diese Verständigung kann dabei via Email oder unter Nutzung des "Short Message Service", kurz SMS, erfolgen. Nach der erfolgten Verständigung wechselt der Wartungsprozess beispielsweise in einen Zustand "Anschluss Teilnehmer X gestört, Techniker verständigt". Gegebenenfalls können aufgetretene Störungen auch völlig automatisch behoben werden, sofern im Telekommunikationsnetz dafür geeignete Einrichtungen vorhanden sind. Eine denkbare Möglichkeit wäre der Neustart einer Recheneinheit, die ausgefallen ist und den Normalbetrieb nach dem Neustart wieder aufnehmen kann, oder eine Änderung der Werte der Betriebsparameter, die bei der Prüfung als außerhalb der Norm liegend erkannt wurden. Ein weiteres Beispiel für einen Prozessschritt ist die Verständigung des Nutzers eines defekten Teilnehmeranschlusses nach Abschluss der Wartungsarbeiten, insbesondere dann, wenn er den Auftrag zur Prüfung gegeben hat. Diese Benachrichtigung kann mittels Aufbau einer Verbindung von einem Sprachautomaten zum Teilnehmer, mittels Email, SMS oder ähnlichen Diensten erfolgen. Der Wartungsprozess kann weiterhin die Protokollierung des Ablaufes der Störungsbehebung in einer Datenbank umfassen. Denkbar ist auch die Berücksichtigung von Zu- oder Abschlägen bei der Gebührenberechnung, insbesondere in Abhängigkeit vom Ergebnis der Prüfung oder in Abhängigkeit von den mit der Prüfung und Instandhaltung verbundenen und in einer Datenbank gespeicherten Vorgängen. Es wird angemerkt, dass die angeführten Beispiele lediglich einen kleinen Teil der umfangreichen Realisierungsmöglichkeiten eines Wartungsprozesses darstellt und daher nicht als Einschränkung des der Erfindung zugrunde liegenden Gedankens verstanden werden sollen.

Vorteilhaft ist es weiterhin, wenn die Ausgabe des Betriebszustandes in Form eines automatisch gebildeten Satzes, insbesondere eines Satzes in der jeweiligen Landessprache, erfolgt.

Auf diese Weise kann ein komplexer Zustand eines Telekommunikationsnetzes, der bei bloßer Betrachtung der Werte der diesem Zustand zugrundeliegenden Betriebsparameter nur sehr schwer und mit entsprechendem Fachwissen als solcher erkannt werden kann, auf vergleichsweise verständliche Art dargestellt werden. Bei entsprechender Aufbereitung der in dem Satz enthaltenen Information ist für die Verständlichkeit des Satzes spezielles Fachwissen nicht oder nur sehr eingeschränkt erforderlich. Diese Variante der Erfindung eignet sich daher vorzugsweise dafür, Teilnehmer eines Telekommunikationsnetzes direkt, das heißt ohne Zwischenschaltung von entsprechend geschultem Personal, anzusprechen. Denkbar ist der Einsatz dieses Verfahrens natürlich auch für Service-Techniker, die so auf verständliche Weise über den Zustand eines Telekommunikationsnetzes informiert werden. Dies ist besonders in einer Einarbeitungsphase eines Service-Technikers von Vorteil. Denkbar ist es auch, Sätze verschiedener Schwierigkeitsstufe bereitzustellen, die dem jeweiligen Informationsbedürfnis verschiedener Personengruppen gerecht werden.

Die Aufgabe der Erfindung wird auch mit einer Anordnung gelöst, welche für die Durchführung des erfindungsgemäßen Verfahrens vorbereitet ist, und
- bei der diese Mittel zum Senden einer Anforderung zur Auswertung des Betriebszustandes mittels beliebigem Telekommunikationsendgerät umfasst,
- bei der Mittel zur Bestimmung der Werte vorgegebener Betriebsparameter des Telekommunikationsnetzes in Folge dieser Anforderung vorhanden sind,
- bei der diese Anordnung Mittel zur Zuordnung eines Betriebszustand zu diesen Werten der Betriebsparameter umfasst und
- bei der Mittel zur einer in vorgebbarer Weise erfolgenden Ausgabe dieses Betriebszustands an ein beliebiges Telekommunikationsendgerät vorhanden sind.

Besonders vorteilhaft an der erfindungsgemäßen Anordnung ist die Möglichkeit, die Erfindung dezentral, von einem Telekommunikationsendgerät aus, nutzen zu können. Aus diesem Grund ist der Dienst praktisch für jeden Teilnehmer eines Telekommunikationsnetzes verfügbar, wobei spezielle technische Gegebenheiten des jeweiligen verwendeten Telekommunikationsendgerätes hinsichtlich der Ein- und Ausgabe berücksichtigt werden müssen. Es wird angemerkt, dass darüber hinaus die beim erfindungsgemäßen Verfahren angeführten Vorteile gleichermaßen auch für die erfindungsgemäße Anordnung gelten.

Günstig ist auch eine Anordnung,
- welche Mittel zur Zuordnung eines durch die Werte der Betriebsparameter gekennzeichneten Zustands zu einem Zustand eines Wartungsprozesses vorhanden sind,
- welche Mittel zur Ausführung zumindest eines, diesem Zustand eines Wartungsprozesses folgenden, vorgegebenen Prozessschrittes vorhanden sind und
- welche Mittel zum Überwechseln des Wartungsprozesses in einen weiteren Zustand vorhanden sind.

In der Regel sind in einem Telekommunikationsnetz bereits Mittel für den Ablauf eines Wartungsprozesses vorhanden, wie etwa ein Call-Center zur Störungsannahme, in dem das mit der Instandhaltung eines Telekommunikationsnetzes betraute Personal in Zusammenarbeit mit dem Nutzer eines defekten Teilnehmeranschlusses ein Trouble-Ticket erstellt und den Reparaturauftrag an einen Service-Techniker weiterleitet. Mit Hilfe dieser Ausgestaltung der erfindungsgemäßen Anordnung wird eine vorteilhafte Kopplungsmöglichkeit eines Wartungsprozesses mit einem System zur Ermittlung eines Betriebszustandes eines Telekommunikationsnetzes offenbart.

Eine vorteilhafte Ausgestaltung der erfindungsgemäßen Anordnung ist gegeben, wenn diese Mittel zur Anzeige des Betriebszustandes in Form eines automatisch gebildeten Satzes, insbesondere eines Satzes in der jeweiligen Landessprache, umfasst. Diese Variante der Erfindung eignet sich daher vorzugsweise dafür, Teilnehmer eines Telekommunikationsnetzes direkt, das heißt ohne Zwischenschaltung von entsprechend geschultem Personal, anzusprechen.

Günstig ist auch eine Anordnung, bei der als Telekommunikationsendgerät ein Telefon vorgesehen ist, insbesondere ein drahtgebundenes Telefon oder ein Mobiltelefon

Günstig ist es dabei, wenn Mittel zur akustischen Ein- und Ausgabe vorhanden sind, insbesondere zur Ein- und Ausgabe mittels Sprache oder mittels DTMF-Tönen. Somit können standardmäßige Telefone für den Einsatz des erfindungsgemäßen Verfahrens verwendet werden, die in der Regel über die erforderlichen technischen Möglichkeiten verfügen. Für die akustische Eingabe mittels DTMF-Tönen können beispielsweise erprobte Komponenten, die etwa zur Steuerung von Automaten in einem Telekommunikationsnetz eingesetzt werden, verwendet werden. Selbstverständlich sind aber nicht nur Mittel zur akustischen Ein- und Ausgabe denkbar, sondern auch Mittel zur Ein- und Ausgabe in Textform, beispielsweise via SMS, Email, WAP oder HTML.

Günstig ist es weiterhin, wenn als Telekommunikationsendgerät ein Personal Computer vorgesehen ist, über den die Ein- und Ausgaben zum und vom Internet erfolgen können. Das Internet ist eine breite Plattform, um die Erfindung einer Vielzahl von Teilnehmern eines Telekommunikationsnetzes zugänglich zu machen. Darüber hinaus bietet insbesondere HTML eine vorteilhafte Möglichkeit, Informationen auf komfortable Weise ein-, beziehungsweise auszugeben.

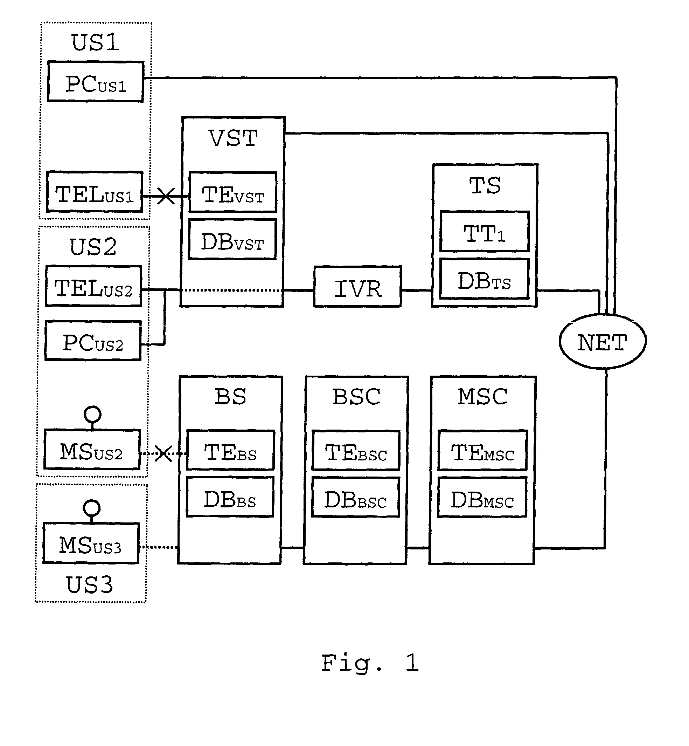

Die Erfindung wird anhand zweier Beispiele näher erläutert, welche in der Figur dargestellt ist und den Ablauf bei der Ermittlung eines Betriebszustandes eines Telekommunikationsnetzes betreffen.

Die Figur zeigt eine Vermittlungsstelle VST mit zugeordneter Prüfeinrichtung TE_{VST} und zugeordneter Datenbank DB_{VST}, eine Basisstation BS mit zugeordneter Prüfeinrichtung TE_{BS} und zugeordneter Datenbank DB_{BS}, eine Basisstationskontrolleinheit BSC mit zugeordneter Prüfeinrichtung TE_{BSC} und zugeordneter Datenbank DB_{BSC}, ein Mobilfunkschaltzentrale MSC mit zugeordneter Prüfeinrichtung TE_{MSC} und zugeordneter Datenbank DB_{MSC}, einen Sprachautomaten IVR, sowie ein Testsystem TS mit zugeordneter Datenbank DB_{TS} und einem ersten Fehlerbehandlungsticket TT1. Weiterhin umfasst die Figur einen ersten Benutzer US1 mit zugeordnetem Computer PC_{US1} und zugeordnetem Telefon TEL_{US1}, einen zweiten Benutzer US2 mit zugeordnetem Computer PC_{US2}, zugeordnetem Telefon TEL_{US2} und zugeordnetem Mobiltelefon MS_{US2}, sowie einen dritten Benutzer US3 mit zugeordnetem zugeordnetem Mobiltelefon MS_{US3}. Außerdem zeigt die Figur ein Telekommunikationsnetz NET.

Das Telefon des ersten Benutzers TEL_{US1}, sowie das Telefon des zweiten Benutzers TEL_{US2} und der Computer des zweiten Benutzers PC_{US2} sind an die Vermittlungsstelle VST angeschlossen, wobei für das Telefon TEL_{US2} und den Computer PC_{US2} eine gemeinsame Anschlussleitung vorgesehen ist. Der Computer des ersten Benutzers PC_{US1} ist direkt mit dem Telekommunikationsnetz NET verbunden. Weiterhin sind das Mobiltelefon des zweiten Benutzers MS_{US2} und das Mobiltelefon des dritten Benutzers MS_{US3} über jeweils eine strichliert dargestellte Funkverbindung an die Basisstation BS gekoppelt.

Die Vermittlungsstelle VST ist über eine Leitung mit dem Sprachautomaten IVR und über eine weitere Leitung mit dem Telekommunikationsnetz NET verbunden. Der Sprachautomat IVR ist weiterhin an das Testsystem TS angeschlossen, welches ebenfalls mit dem Telekommunikationsnetz NET verbunden ist.

Die Basisstation BS ist an die Basisstationskontrolleinheit BSC angeschlossen, welche mit der Mobilfunkschaltzentrale MSC verbunden ist. Die Mobilfunkschaltzentrale MSC ist überdies an das Telekommunikationsnetz NET angeschlossen.

Aus der Figur ist außerdem eine Verbindung zwischen dem Telefon des ersten Benutzers TEL_{US1} und der Prüfeinrichtung der Vermittlungsstelle TE_{VST} ersichtlich. Desgleichen ist das Mobiltelefon des zweiten Benutzers MS_{US2} mit der Prüfeinrichtung der Basisstation TE_{BS} verbunden. Weiterhin ist eine Verbindung zwischen dem Telefon TEL_{US2} beziehungsweise dem Computer PC_{US2} und dem Sprachautomaten IVR mit Hilfe einer strichlierten Linie dargestellt.

Die Verbindungen zum Telefon des ersten Benutzers TEL_{US1} und zum Mobiltelefon des zweiten Benutzers MS_{US2} sind nicht funktionstüchtig und daher mit einem X gekennzeichnet.

Die Funktion der in der Figur dargestellten Anordnung ist wie folgt:

Als erstes Beispiel wird angenommen, dass der erste Benutzer US1 feststellt, dass sein Telefon TEL_{US1} nicht oder nur eingeschränkt funktionstüchtig ist. Aus diesem Grund kann er mit Hilfe dieses Gerätes keine Anfrage an den Betreiber des Telefonnetzes stellen, welcher Art die Störung ist, beziehungsweise einen Reparaturauftrag erteilen. Er stellt die Verbindung zum Testsystem TS daher über seinen Computer PC_{US1} her. Seitens des Testsystems TS wird eine entsprechende HTML-Seite zur Verfügung gestellt, die das Absenden eines Testauftrags ermöglicht. Der erste Benutzer US1 kann dort etwa die Rufnummer des zu testenden Teilnehmeranschlusses, im gezeigten Beispiel die Rufnummer seines Telefons TEL_{US1} eintragen. Denkbar ist auch die Abfrage der Begleitumstände des Störfalles, so wie sie sich für den ersten Benutzer US1 darstellen. Ein Beispiel dafür wäre, ob der Anschluss hinsichtlich seiner Sprachqualität gestört ist, Verbindungen nur zu bestimmten Anschlüssen möglich sind oder das Schalten einer Verbindung überhaupt nicht erfolgt. Die hier angeführte Liste der Fragen an den Benutzer ist unvollständig. Viel mehr ist die Abfrage umfangreicher Information denkbar. Es wird angenommen, dass der erste Benutzer US1 den Test seines Telefons TEL_{US1} ohne weitere Angabe von Gründen initiiert, lediglich mitteilt, dass das Ergebnis via E-Mail an seinen Computer PC_{US1} übermittelt werden soll. Seitens des Systems ist dabei gegebenenfalls auch sicherzustellen, dass die Anforderung des angeführten Dienstes nur von berechtigten Personen erfolgen kann, beispielsweise durch Eingabe einer Identifikationsnummer.

Vom Testsystem TS wird in Folge ein Auftrag an die Vermittlungsstelle VST abgesetzt, dass das Telefon des ersten Benutzers TEL_{US1} überprüft werden soll. In der Vermittlungsstelle VST wird diese Aufgabe mit Hilfe der Prüfeinrichtung TE_{VST} und der Datenbank DB_{VST} durchgeführt. Im gezeigten Beispiel werden mittels Prüfeinrichtung TE_{VST} die elektrischen Parameter der Leitung zum Telefon des ersten Benutzers TEL_{US1} ermittelt. Es wird angenommen, dass sich für den Widerstand der a-Ader gegen Erde ein vergleichsweise kleiner Wert ergibt. Gegebenenfalls kann auch das Telefon TEL_{US1} selbst überprüft werden, sofern es technisch für diesen Zweck vorbereitet ist. Aus der Datenbank DB_{VST} ergibt sich darüber hinaus, welchen Modulen das Telefon des ersten Benutzers TEL_{US1} innerhalb der Vermittlungsstelle VST zugeordnet ist. Es wird angenommen, dass das entsprechende Anschlussmodul ebenfalls defekt ist. Diese Information wird an das Testsystem TS gemeldet.

Im Testsystem TS wird diese Information mit Hilfe der zugeordneten Datenbank DB_{TS} ausgewertet. Im Beispiel soll dort vermerkt sein, dass die Reparaturarbeiten im Bereich der defekten Anschlussgruppe in der Vermittlungsstelle bereits aufgenommen wurden. Mittels Testsystem TS wird nun etwa folgende Nachricht erzeugt und via E-Mail an den Computer des ersten Benutzers PC_{US1} übermittelt: "Wir bestätigen den Erhalt Ihres Prüfauftrags und bedauern Ihnen mitteilen zu müssen, dass Ihr Anschluss mit der Rufnummer x leider nicht betriebsbereit ist. Die Instandsetzungsarbeiten wurden bereits aufgenommen und werden voraussichtlich bis y Uhr beendet sein. Dieser Prüfauftrag ist kostenlos".

Als zweites Beispiel wird angenommen, dass der zweite Benutzer US2 feststellt, dass sein Mobiltelefon MS_{US2} nur eingeschränkt funktionstüchtig ist, beispielsweise beim Download von Daten auffallend langsam ist und weiterhin Gesprächsverbindungen nur eingeschränkt möglich sind. Aus diesem Grunde wählt er über sein Telefon TEL_{US2} die Rufnummer der Störungsannahme und wird daraufhin vom Testsystem TS mit dem Sprachautomaten IVR verbunden. Mit Hilfe des Sprachautomaten IVR werden einfache Informationen vom zweiten Benutzer US2 abgefragt, wie etwa die Rufnummer des zu überprüfenden Teilnehmeranschlusses. Der zweite Benutzer US2 übermittelt die Rufnummer seines Mobiltelefons MS_{US2} mit Hilfe von DTMF-Tönen und fügt - was ebenfalls mit Hilfe des Sprachautomaten IVR erfragt wird - anschließend verbal hinzu, dass er im Falle eines festgestellten Fehlers eine unmittelbare Behebung desselben wünscht. Weiters gibt er an, dass der Verbindungsaufbau und auch die Datenübertragung mit dem Mobiltelefon MS_{US2} nur eingeschränkt möglich sind. Der entsprechende Auftrag wird im Sprachautomaten IVR vorverarbeitet und an die Steuerung des Testsystems TS weitergereicht.

Mit Hilfe des Testsystems TS wird in Folge ein Testauftrag an das Mobilfunknetz gesandt, welchem das Mobiltelefon des zweiten Benutzers MS_{US2} zugeordnet ist.

In der Basisstation BS mit zugeordneter Prüfeinrichtung TE_{BS} und zugeordneter Datenbank DB_{BS}, der Basisstationskontrolleinheit BSC mit zugeordneter Prüfeinrichtung TE_{BSC} und zugeordneter Datenbank DB_{BSC} und der Mobilfunkschaltzentrale MSC mit zugeordneter Prüfeinrichtung TE_{MSC} und zugeordneter Datenbank DB_{MSC} werden daraufhin die für den Auftrag erforderlichen Messungen durchgeführt, beziehungsweise die erforderlichen Parameter ermittelt. Die Art und Weise richtet sich dabei unter anderem nach den Angaben, die vom zweiten Benutzer US2 gemacht wurden.

Die ermittelten Daten werden an das Testsystem TS gemeldet, wobei in den einzelnen Einheiten gegebenenfalls eine Vorverarbeitung stattfinden kann. Für das vorliegenden Beispiel wird angenommen, dass die Ursache des Fehlers in einem Modul der Basisstation BS liegt. Mit Hilfe des Testsystems TS wird in Folge eine Analyse des Fehlers erstellt. Der zweite Benutzer US2 wird während der bestehenden Verbindung über Art und Weise des Fehlers informiert. Da er eine unmittelbare Fehlerbehebung gewünscht hat, wird weiterhin das erste Fehlerbehebungsticket TT₁ erstellt, welches Teil eines Wartungsprozesses ist und die Fehleranalyse, sowie weitere die Störung betreffende Daten umfasst. Der zweite Benutzer US2 wird über die Annahme des Reparaturauftrags informiert. Mit Hilfe des Sprachautomaten IVR bekommt er die Möglichkeit geboten, über das Ende der Wartungsarbeiten beispielsweise per Rückruf oder via E-Mail verständigt zu werden. Er wählt daraufhin die Verständigung mittels E-Mail und trennt die Verbindung.

Das erste Fehlerbehebungsticket TT₁ wird in Folge einem zuständigen Servicetechniker, im gezeigten Beispiel dem dritten Benutzer US3 zugestellt. Dafür können beispielsweise die Dienstzeiten und die momentanen Aufenthaltsorte der mit der Wartung beauftragen Personen ausgewertet werden, um die Reparaturaufträge optimal verteilen zu können. Der dritte Benutzer US3 beginnt daraufhin mit der Behebung der Störung und gibt wichtige Entwicklungen im Wartungsprozess, insbesondere die erfolgreiche Behebung des Fehlers, an das Testsystem TS weiter. Der zweite Benutzer US2 kann daher über den Fortschritt des Wartungsprozesses auf dem Laufenden gehalten werden. Im gezeigten Beispiel wird die Verständigung über die Behebung des Fehlers per E-Mail an den Computer des zweiten Benutzers PC_{US2} zugestellt.

Der erfinderische Gedanke ist dabei nicht nur für eine Art einer Kommunikationseinrichtung gültig, sondern kann auf ein weites technisches Gebiet von Telekommunikationsnetzen angewandt werden. Beispiele hierfür sind das "Plain Old Telephone System", kurz POTS, das "Integrated Services Digital Network", kurz ISDN, die "Digital Subscriber Line", kurz DSL, das "Global System for Mobile Communication", kurz GSM, und das "Universal Mobile Telephony System", kurz UMTS.

Vorteilhaft ist es weiterhin, wenn die Informationen, welche mit der Störung in Zusammenhang stehen, eingesehen werden können. Entsprechende Daten sind beispielsweise die Prüfergebnisse, ob der Teilnehmer die Prüfung initiiert und die Verständigung über die erfolgreiche Behebung der Störung erhalten hat, Aufstellung der Kosten und der erforderlichen Ersatzteile, sowie Informationen über die Laufzeit vom Beginn der Kundenbeschwerde bis zur Problembehebung.

Bei unberechtigter Inanspruchnahme des Dienstes, beispielsweise wenn ein teilnehmereigenes Endgerät defekt ist, die Geräte im Bereich des Betreibers des Telekommunikationsnetzes ordnungsgemäß arbeiten, kann eine Gebühr verrechnet werden. Die entsprechenden Informationen werden hierbei automatisch an die mit der Verrechnung der Gebühren betrauten Stelle weitergereicht.

Vorteilhaft ist es auch, wenn die Schnittstellen zwischen den einzelnen Modulen des Systems so definiert werden, dass sie unabhängig von der Art der verwendeten Hardware sind. Dies ermöglicht die Realisierung der Erfindung auf unterschiedlichen Hardware-Plattformen. Ein Beispiel für eine hardwareunabhängige Schnittstellendefinition ist die Anwendung der "Common Object Request Broker Architecture", kurz CORBA.

Ein Vorteil der Erfindung ist es also, dass der Teilnehmer in einem Telekommunikationsnetz gegebenenfalls unmittelbar über Art der Störung und den Fortschritt eines zugeordneten Wartungsprozesse informiert werden kann, sowie die automatische Verknüpfung mit eines Prüfauftrags mit einem Wartungsprozess.

## Patentansprüche

1. Verfahren zur Ermittlung des Betriebszustandes zumindest eines Teils eines Telekommunikationsnetzes, insbesondere des Betriebszustandes eines beliebigen Teilnehmeranschlusses in einem Telekommunikationsnetz,
- bei dem die Anforderung zur Ermittlung mittels beliebigem Telekommunikationsendgerät in das Telekommunikationsnetz übermittelt wird,
- bei dem aufgrund dieser Anforderung die Werte vorgegebener Betriebsparameter des Telekommunikationsnetzes ermittelt werden,
- bei dem diesen Werten der Betriebsparameter ein Betriebszustand zugeordnet wird und
- bei dem dieser Betriebszustand in vorgebbarer Weise an ein beliebiges Telekommunikationsendgerät ausgegeben wird.

2. Verfahren nach Anspruch 1, **dadurch gekennzeichnet,**
- **dass** als Betriebsparameter ein Datensatz einer Datenbank vorgesehen wird und/oder
- **dass** als Betriebsparameter ein elektrischer Parameter, insbesondere ein elektrischer Widerstand, eine Kapazität oder eine Induktivität, vorgesehen wird und/oder
- **dass** als Betriebsparameter eine Fehlerrate bei der digitalen Datenübertragung vorgesehen wird.

3. Verfahren nach einem der Ansprüche 1 bis 2, **dadurch gekennzeichnet,**
- **dass** die Anforderung zusätzliche, vom Benutzer des Telekommunikationsendgerätes gemachte Angaben umfasst,
- **dass** diese Angaben für die Vorgabe der zu ermittelnden Betriebsparameter herangezogen werden.

4. Verfahren nach einem der Ansprüche 1 bis 3, **dadurch gekennzeichnet,**
- **dass** die Anforderung zusätzlich vom Benutzer des Telekommunikationsendgerätes gemachte Angaben umfasst,
- **dass** diese Angaben neben den ermittelten Werten der Betriebsparameter für die Zuordnung eines Betriebszustands herangezogen werden.

5. Verfahren nach einem der Ansprüche 1 bis 4, **dadurch gekennzeichnet,**
- **dass** einem durch die Werte der Betriebsparameter gekennzeichneten Zustand ein Zustand eines Wartungsprozesses zugeordnet wird,
- **dass** diesem Zustand eines Wartungsprozesses die Ausführung zumindest eines vorgegebenen Prozessschrittes folgt und
- **dass** der Wartungsprozess in einen weiteren Zustand wechselt.

6. Verfahren nach einem der Ansprüche 1 bis 5, **dadurch gekennzeichnet, dass** die Ausgabe des Betriebszustandes in Form eines automatisch gebildeten Satzes, insbesondere eines Satzes in der jeweiligen Landessprache, erfolgt.

7. Anordnung, vorbereitet zur Durchführung eines Verfahrens nach einem der Ansprüche 1 bis 6,
**dadurch gekennzeichnet,**
- **dass** diese Mittel zum Senden einer Anforderung zur Auswertung des Betriebszustandes mittels beliebigem Telekommunikationsendgerät umfasst,
- **dass** Mittel zur Bestimmung der Werte vorgegebener Betriebsparameter des Telekommunikationsnetzes in Folge dieser Anforderung vorhanden sind,
- **dass** diese Anordnung Mittel zur Zuordnung eines Betriebszustand zu diesen Werten der Betriebsparameter umfasst und
- **dass** Mittel zur einer in vorgebbarer Weise erfolgenden Ausgabe dieses Betriebszustands an ein beliebiges Telekommunikationsendgerät vorhanden sind.

8. Anordnung nach Anspruch 7, **dadurch gekennzeichnet,**
- **dass** Mittel zur Zuordnung eines durch die Werte der Betriebsparameter gekennzeichneten Zustands zu einem Zustand eines Wartungsprozesses vorhanden sind,
- **dass** Mittel zur Ausführung zumindest eines, diesem Zustand eines Wartungsprozesses folgenden, vorgegebenen Prozessschrittes vorhanden sind und
- **dass** Mittel zum Überwechseln des Wartungsprozesses in einen weiteren Zustand vorhanden sind.

9. Anordnung nach einem der Ansprüche 7 bis 8, **dadurch gekennzeichnet, dass** diese Mittel zur Anzeige des Betriebszustandes in Form eines automatisch gebildeten Satzes, insbesondere eines Satzes in der jeweiligen Landessprache, umfasst.

## Geänderte Patentansprüche

### Geänderte Patentansprüche gemäss Regel 86(2) EPÜ.

1. Verfahren zur Ermittlung des Betriebszustandes zumindest eines Teils eines Telekommunikationsnetzes, insbesondere des Betriebszustandes eines beliebigen Teilnehmeranschlusses in einem Telekommunikationsnetz,
- bei dem die Anforderung zur Ermittlung mittels beliebigem Telekommunikationsendgerät in das Telekommunikationsnetz übermittelt wird,
- bei dem aufgrund dieser Anforderung die Werte mehrerer vorgegebener Betriebsparameter des Telekommunikationsnetzes ermittelt werden,
**dadurch gekennzeichnet,**
- **dass** diesen Werten der Betriebsparameter ein Betriebszustand zugeordnet wird und
- **dass** dieser Betriebszustand in vorgebbarer, den technischen Sachverstand des Empfängers berücksichtigender, Weise wahlweise an das anfordernde oder ein anderes beliebiges Telekommunikationsendgerät ausgegeben wird.

2. Verfahren nach Anspruch 1, **dadurch gekennzeichnet,**
- **dass** als Betriebsparameter ein Datensatz einer Datenbank vorgesehen wird und/oder
- **dass** als Betriebsparameter ein elektrischer Parameter, insbesondere ein elektrischer Widerstand, eine Kapazität oder eine Induktivität, vorgesehen wird und/oder
- **dass** als Betriebsparameter eine Fehlerrate bei der digitalen Datenübertragung vorgesehen wird.

3. Verfahren nach einem der Ansprüche 1 bis 2, **dadurch gekennzeichnet,**
- **dass** die Anforderung zusätzliche, vom Benutzer des Telekommunikationsendgerätes gemachte Angaben umfasst,
- **dass** diese Angaben für die Vorgabe der zu ermittelnden Betriebsparameter herangezogen werden.

4. Verfahren nach einem der Ansprüche 1 bis 3, **dadurch gekennzeichnet,**
- **dass** die Anforderung zusätzlich vom Benutzer des Telekommunikationsendgerätes gemachte Angaben umfasst,
- **dass** diese Angaben neben den ermittelten Werten der Betriebsparameter für die Zuordnung eines Betriebszustands herangezogen werden.

5. Verfahren nach einem der Ansprüche 1 bis 4, **dadurch gekennzeichnet,**
- **dass** einem durch die Werte der Betriebsparameter gekennzeichneten Zustand ein Zustand eines Wartungsprozesses zugeordnet wird,
- **dass** diesem Zustand eines Wartungsprozesses die Ausführung zumindest eines vorgegebenen Prozessschrittes folgt und
- **dass** der Wartungsprozess in einen weiteren Zustand wechselt.

6. Verfahren nach einem der Ansprüche 1 bis 5, **dadurch gekennzeichnet, dass** die Ausgabe des Betriebszustandes in Form eines automatisch gebildeten Satzes, insbesondere eines Satzes in der jeweiligen Landessprache, erfolgt.

7. Anordnung, vorbereitet zur Durchführung eines Verfahrens nach einem der Ansprüche 1 bis 6,
**dadurch gekennzeichnet,**
- **dass** diese Mittel zum Senden einer Anforderung zur Auswertung des Betriebszustandes mittels beliebigem Telekommunikationsendgerät umfasst,
- **dass** Mittel zur Bestimmung der Werte vorgegebener Betriebsparameter des Telekommunikationsnetzes in Folge dieser Anforderung vorhanden sind,
- **dass** diese Anordnung Mittel zur Zuordnung eines Betriebszustand zu diesen Werten der Betriebsparameter umfasst und
- **dass** Mittel zur einer in vorgebbarer Weise erfolgenden Ausgabe dieses Betriebszustands an ein beliebiges Telekommunikationsendgerät vorhanden sind.

8. Anordnung nach Anspruch 7, **dadurch gekennzeichnet,**
- **dass** Mittel zur Zuordnung eines durch die Werte der Betriebsparameter gekennzeichneten Zustands zu einem Zustand eines Wartungsprozesses vorhanden sind,
- **dass** Mittel zur Ausführung zumindest eines, diesem Zustand eines Wartungsprozesses folgenden, vorgegebenen Prozessschrittes vorhanden sind und
- **dass** Mittel zum Überwechseln des Wartungsprozesses in einen weiteren Zustand vorhanden sind.

9. Anordnung nach einem der Ansprüche 7 bis 8, **dadurch gekennzeichnet, dass** diese Mittel zur Anzeige des Betriebszustandes in Form eines automatisch gebildeten Satzes, insbesondere eines Satzes in der jeweiligen Landessprache, umfasst.
